# EUROPEAN PATENT SPECIFICATION

(11) **EP 2 321 561 B1**
(45) Date of publication and mention of the grant of the patent: **02.10.2013**
(21) Application number: 09784888.1
(22) Date of filing: 07.08.2009
(51) Int. Cl.: F16J 15/16, F16J 15/32

(54) **IMPROVEMENTS IN AND RELATING TO SPRING ENERGISED PLASTIC SEALS**
VERBESSERUNGEN VON FEDERERREGTEN KUNSTSTOFFDICHTUNGEN UND DIESE BETREFFEND
AMÉLIORATIONS APPORTÉES OU SE RAPPORTANT À DES FERMETURES EN PLASTIQUE ACTIONNÉES PAR RESSORT

(30) Priority: 11.08.2008 GB 0814616
(43) Date of publication of application: 18.05.2011
(73) Proprietor: John Crane UK Limited, Slough SL1 4LU (GB)
(72) Inventor: KIRCHNER, Christian, 44287 Dortmund (DE)
(74) Representative: Watts, Peter Graham
(86) International application number: PCT/GB2009/001942
(87) International publication number: WO 2010/018364

(56) References cited:
- EP-A- 0 867 647
- EP-A- 0 922 891
- GB-A- 1 385 882
- US-A- 4 053 166
- US-A1- 2005 189 721
- US-B1- 6 264 205

## Description

The present invention relates to spring energised plastic seals.

EP0867647 A2 discloses a spring energised plastic seal with a backup ring which will prevent extrusion of the plastic seal between the components sealed.

In accordance with one aspect of the present invention, a seal assembly for providing a seal between a pair of components comprises a sealing ring made of flexible plastics material which is located coaxially between the components, the sealing ring being of channel section having a pair of limbs extending axially to one side of the sealing ring, the inner periphery of the inner limb forming a sealing element for engagement of a surface of said component mounted internally of the sealing ring, spring means acting on the external periphery of the inner limb to resiliently load the sealing element into sealing engagement with the surface of the inner component, a rigid ring abutting the internal periphery of the outer limb of the sealing ring, to compress the outer limb into sealing engagement with a surface of the component mounted externally of the sealing ring; and a backup ring made of resiliently flexible plastics material being located coaxially of the sealing ring on the side thereof remote from the limbs, the backup ring having an portion of increased internal diameter at an end remote from the base of the channel section of the sealing ring, the backup ring abutting a frusto-conical surface of the base of the sealing ring, said frusto-conical surface extending from the internal diameter away from the limbs of the sealing ring and engaging a corresponding frusto-conical surface of the backup ring, to apply a radial load to the inner periphery of the backup ring urging it towards the outer periphery of the inner component, when an axial load is applied to the sealing ring by exposure of the sealing ring to pressure from the side of the sealing ring to which the limbs extend, the projection on the backup ring engaging an inner periphery of an axially extending annular recess in the outer component, to locate and support the back-up ring radially, said sealing ring having an annular axial projection extending from the base of the channel section on the side thereof remote from the limbs, the internal surface of the annular projection being radially outwardly of the frusto-conical surface of the base of the sealing ring and engaging an outer peripheral surface of portion of the back-up ring and extending with portion of the backup ring into the axially extending annular recess in the outer component.

In accordance with the present invention, when the seal is pressurised from the side to which the limbs extend, the limbs will be urged outwardly to increase the seal provided between the sealing element on the inner limb and the surface of the inner component. The axial load applied to the sealing ring will also urge the inner periphery of the backup ring inwardly, closing the gap between the backup ring and surface if the inner component and preventing extrusion of the inner limb of the sealing ring through the gap. The backup ring is supported radially by engagement of the inner periphery of the portion of increased internal diameter with the internal periphery of the annular recess in the outer component, to prevent the backup ring from buckling and being extruded into the gap between the inner and outer components.

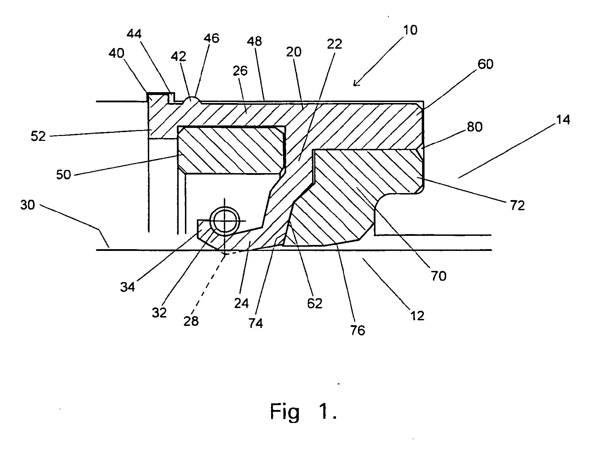

The invention is now described, by way of example only, with reference to Figure 1 which shows a part sectional side elevation of a seal in accordance with the present invention.

Figure 1 shows seal assembly 10 for providing a secondary seal between a carrier ring 12 of a mechanical face seal and a housing 14, the carrier ring 12 being slidably mounted with respect to the housing, in know manner.

The seal assembly 10 comprises a polymeric sealing ring 20 made of, for example PTFE. The sealing ring 20 has an axially extending channel portion having a radially extending base 22 and a pair of radially separated axially extending limbs 24, 26. The inner limb 24 has an annular seal formation 28 on its inner periphery which is urged into sealing engagement with a cylindrical outer surface 30 of the carrier ring 12, by means of a garter spring 32. The garter spring 32 acts on the outer periphery of limb 24 radially outwardly of the seal formation 28 and is located in position by means of a radially outwardly extending flange formation 34 at the free end of limb 24.

A radially outwardly extending flange formation 40 is provided at the free end of the outer limb 26 and an annular rib formation 42 is provided in the outer periphery of limb 26, adjacent the flange formation 40. The flange formation 40 and rib 42 engage in corresponding annular recesses 44, 46 respectively, in a cylindrical surface 48 of the housing 14. A metal ring 50 is located in the channel section of ring 20, the metal ring engaging the inner periphery of limb 26 and compressing the limb 26 against cylindrical surface 48, to form a seal against the cylindrical surface 48. The metal ring 50 is located in the channel section by means of a flange formation 52 which extends radially inwardly from the free end of limb 26.

An annular projection 60 extends axially to the side of the base 22 opposite to the channel section of sealing ring 20, about its outer periphery. Internally of the annular projection 60, the end face of the base 22 remote from limbs 24, 26 has a frusto-conical surface 62 which is inclined from the internal diameter of the sealing ring 20 away from the limbs 24, 26.

A back-up ring 70 made of flexible plastics material, is mounted internally of the annular projection 60, the end portion 72 of the back-up ring 70 remote from the base 22 of the channel portion of sealing ring 20 is of enlarged internal diameter. The face of the backup ring 70 adjacent the base 22 of the channel section of sealing ring 20 has a frusto-conical surface 74 corresponding to and engaging the frusto-conical surface 62 of the sealing ring 20. The inner periphery 76 of the smaller internal diameter portion of back-up ring 70 remote from the sealing ring 20 is tapered outwardly.

The projection 60 and larger internal diameter portion 72 of backup ring 70 are located in an axially extending recess 80 in the housing 14, which serves to locate the sealing ring 20, the back-up ring 70 and the carrier ring 12 axially of the housing 14.

In operation, the seal assembly is mounted between the housing 14 and carrier ring 12, with the channel section opening towards the pressure side of the mechanical face seal. The pressure of the service fluid will consequently urge the inner limb 24 inwardly to reinforce the radial load applied by the garter spring 32 and ensure the seal with the carrier ring 12. Furthermore, the axial load applied by the fluid pressure will force the frusto-conical surface 62 of the sealing ring 20 against frusto-conical surface 74 of back-up ring 70, applying a radial load to the back-up ring 70 causing it to deform and close the gap with the cylindrical surface of the carrier ring 12 and preventing extrusion of the limb 24 through the gap between the housing 14 and carrier ring 12. Engagement of the inner periphery of the larger diameter portion 72 of backup ring 70 with the inner periphery of recess 80 will prevent the back-up ring 70 from buckling and being extruded into the gap between the housing 14 and carrier ring 12, under the load applied by the sealing ring.

The metal ring 50 will also accommodate thermal growth differentials at the outer diameter of the seal ring 20.

## Claims

1. A seal assembly (10) for providing a seal between a pair of components (12,14) comprising a sealing ring (20) made of flexible plastics material which in use is located coaxially between the components (12,14), the sealing ring (20) being of channel section having a pair of limbs (24,26) extending axially to one side of the sealing ring (20), the inner periphery of the inner limb (24) forming a sealing element (28) for engagement of a surface of said component (12) mounted internally of the sealing ring (20), spring means (32) acting on the external periphery of the inner limb (24) to resiliently load the sealing element (28) into sealing engagement with the surface (30) of the inner component (12), and a backup ring (70) made of resiliently flexible plastics material being located coaxially of the sealing ring on the side thereof remote from the limbs (24,26), the backup ring (70) having a portion (72) of increased internal diameter at an end remote from the base (22) of the channel section of the sealing ring (20), the backup ring (70) abutting a frusto-conical surface (62) of the base (22) of the sealing ring (20), said frusto-conical surface (62) extending from the internal diameter away from the limbs (24,26) of the sealing ring (20) and engaging a corresponding frusto-conical surface (74) of the backup ring (70), to apply a radial load to the inner periphery (76) of the backup ring (70) urging it towards the outer periphery of the inner component (12), when an axial load is applied to the sealing ring (20) by exposure of the sealing ring (20) to pressure from the side of the sealing ring (20) to which the limbs (24,26) extend, the portion (72) of the back-up ring (70) being adapted to engage an inner periphery of an axially extending annular recess (80) in the outer component (14), to locate and support the back-up ring (70) radially, **characterised in that** a rigid ring (50) abuts the internal periphery of the outer limb (26) of the sealing ring (20), to compress the outer limb (26) into sealing engagement with a surface (48) of the component (14) mounted externally of the sealing ring (20), said sealing ring (20) having an annular axial projection (60) extending from the base (22) of the channel section on the side thereof remote from the limbs (24,26), the internal surface of the annular projection (60) being radially outwardly of the frusto-conical surface (62) of the base (22) of the sealing ring (20) and engaging an outer peripheral surface of portion (72) of the back-up ring (70) and being adapted to engage with portion (72) of the backup ring (70) into the axially extending annular recess (80) in the outer component (14).

2. A seal assembly (10) according to claim 1 **characterised in that** the seal ring (20) is made of a low friction polymeric material.

3. A seal assembly (10) according to claim 2 **characterised in that** the seal ring (20) is made of PTFE.

4. A seal assembly (10) according to any one of the preceding claims **characterised in that** the inner limb (24) of the seal ring has an annular seal formation (28) on its inner periphery, the annular seal formation (28) being adjacent a free end of the inner limb (24).

5. A seal assembly (10) according to any one of the preceding claims **characterised in that** a garter spring (32) acts on the external periphery of the inner limb (24) of the seal ring (20) to resiliently load the inner limb (24) into sealing engagement with the inner component (12).

6. A seal assembly (10) according to any one of the preceding claims **characterised in that** the rigid ring (50) is made of metal.

## Patentansprüche

1. Dichtungszusammenbau (10) zum Schaffen einer Dichtung zwischen zwei Bauteilen (12, 14), mit einem aus flexiblem Kunststoff hergestellten Dichtungsring (20), der im Gebrauch koaxial zwischen den Bauteilen (12, 14) angeordnet ist, wobei der Dichtungsring (20) einen U-förmigen Querschnitt mit zwei Schenkeln (24, 26) hat, die sich axial auf eine Seite des Dichtungsringes (20) erstrecken, wobei der innere Rand des inneren Schenkels (24) ein Dichtungselement (28) zur Anlage einer Fläche des innerhalb des Dichtungsringes (20) angeordneten Bauteils (12) bildet, einem Federmittel (32), das auf den äußeren Rand des inneren Schenkels (24) einwirkt, um das Dichtungselement (28) in Dichtungsanlage mit der Fläche (30) des inneren Bauteils (12) federnd nachgiebig zu drücken, und einem aus federnd nachgiebigem Kunststoff hergestellten Stützring (70), der koaxial zu dem Dichtungsring auf dessen von den Schenkeln (24, 26) entfernten Seite angeordnet ist, wobei der Stützring (70) einen Teil (72) mit einem vergrößerten Innendurchmesser an einem von der Basis (22) des U-förmigen Querschnitts des Dichtungsringes (20) entfernten Ende hat, wobei der Dichtungsring (70) an eine kegelstumpfförmige Fläche (62) der Basis (22) des Dichtungsringes (20) stößt, wobei sich die kegelstumpfförmige Fläche (62) von dem Innendurchmesser aus weg von den Schenkeln (24, 26) des Dichtungsringes (20) erstreckt und an einer entsprechenden kegelstumpfförmigen Fläche (74) des Stützringes (70) anliegt, um eine Radiallast auf den inneren Rand (76) des Stützringes (70) aufzubringen, um ihn in Richtung auf den äußeren Rand des inneren Bauteils (12) zu drängen, wenn eine Axiallast auf den Dichtungsring (20) durch Beaufschlagung des Dichtungsringes (20) mit Druck von derjenigen Seite des Dichtungsringes (20), auf die sich die Schenkel (24, 26) erstrecken, aufgebracht wird, wobei der Teil (72) des Stützringes (70) dafür ausgebildet ist, an einem inneren Rand einer sich axial erstreckenden ringförmigen Ausnehmung (30) in dem äußeren Bauteil (14) anzuliegen, um den Stützring (70) radial zu zentrieren und abzustützen, dadurch gekenntzeichnet, dass ein starrer Ring (50) an den inneren Rand des äußeren Schenkels (26) des Dichtungsringes (20) stößt, um den äußeren Schenkel (26) in Dichtungsanlage mit einer Fläche (48) des außerhalb des Dichtungsringes (20) angeordneten Bauteils (14) kompressiv zu drücken, wobei der Dichtungsring (20) einen ringförmigen axialen Vorsprung (60) hat, der sich von der Basis (22) des U-förmigen Querschnitts auf dessen von den Schenkeln (24, 26) entfernten Seite erstreckt, wobei die innere Fläche des ringförmigen Vorsprungs (60) radial außerhalb der kegelstumpfförmigen Fläche (62) der Basis (22) des Dichtungsringes (20) ist und an einer äußeren Randfläche des Teils (72) des Stützringes (70) anliegt und dafür ausgebildet ist, mit dem Teil (72) des Stützringes (70) in die sich axial erstreckende ringförmige Ausnehmung (80) in dem äußeren Bauteil (14) einzugreifen.

2. Dichtungszusammenbau (10) nach Anspruch 1, **dadurch gekennzeichnet, dass** der Dichtungsring (20) aus einem polymeren Material geringer Reibung hergestellt ist.

3. Dichtungszusammenbau (10) nach Anspruch 2, **dadurch gekennzeichnet, dass** der Dichtungsring (20) aus PTFE hergestellt ist.

4. Dichtungszusammenbau (10) nach irgend einem der vorhergehenden Ansprüche, **dadurch gekennzeichnet, dass** der innere Schenkel (24) des Dichtungsringes ein ringförmiges Dichtungsgebilde (28) an seinem inneren Rand hat, wobei das ringförmige Dichtungsgebilde (28) angrenzend an ein freies Ende des inneren Schenkels (24) ist.

5. Dichtungszusammenbau (10) nach irgend einem der vorhergehenden Ansprüche, **dadurch gekennzeichnet, dass** eine in sich geschlossene ringförmige Schraubenfeder (32) auf den äußeren Rand des inneren Schenkels (24) des Dichtungsringes (20) einwirkt, um den inneren Schenkel (24) in Dichtungsanlage mit dem inneren Bauteil (12) federnd nachgiebig zu drücken.

6. Dichtungszusammenbau (10) nach irgend einem der vorhergehenden Ansprüche, **dadurch gekennzeichnet, dass** der starre Ring (50) aus Metall hergestellt ist.

## Revendications

1. Assemblage d'étanchéité (10) destiné à fournir une étanchéité entre une paire de composants (12, 14) comprenant une bague d'étanchéité (20) constituée d'un matériau en plastique flexible qui lors du fonctionnement est placée de manière coaxiale entre les composants (12, 14), la bague d'étanchéité (20) étant de section de canal présentant une paire de membres (24, 26) s'étendant de manière axiale sur un côté de la bague d'étanchéité (20), la périphérie interne du membre interne (24) formant un élément d'étanchéité (28) pour un engagement d'une surface dudit composant (12) monté de manière interne par rapport à la bague d'étanchéité (20), un moyen de ressort (32) agissant sur la périphérie externe du membre interne (24) afin de charger de manière résiliente l'élément d'étanchéité (28) dans l'engagement d'étanchéité avec la surface (30) du composant interne (12), et une bague d'appui (70) constituée d'un matériau en plastique flexible de façon résiliente placée de manière coaxiale par rapport à la bague d'étanchéité sur le côté de celle-ci à distance des membres (24, 26), la bague d'appui (70) présentant une partie (72) de diamètre interne augmenté au niveau d'une extrémité à distance de la base (22) de la section de canal de la bague d'étanchéité (20), la bague d'appui (70) étant contigüe à une surface tronconique (62) de la base (22) de la bague d'étanchéité (20), ladite surface tronconique (62) s'étendant à partir du diamètre interne jusqu'aux membres (24, 26) de la bague d'étanchéité (20) et engageant une surface tronconique correspondante (74) de la bague d'appui (70), afin d'appliquer une charge radiale à la périphérie interne (76) de la bague d'appui (70) la poussant vers la périphérie externe du composant interne (12), lorsqu'une charge axiale est appliquée à la bague d'étanchéité (20) en exposant la bague d'étanchéité (20) à une pression provenant du côté de la bague d'étanchéité (20) jusqu'à laquelle les membres (24, 26) s'étendent, la partie (72) de la bague d'appui (70) étant conçue pour engager une périphérie interne d'un évidemment annulaire s'étendant axialement (80) dans un composant externe (14), afin de placer et de supporter la bague d'appui (70) de manière radiale, **caractérisé en ce qu'**une bague rigide (50) est contigüe à la périphérie interne du membre externe (26) de la bague d'étanchéité (20), afin de comprimer le membre externe (26) dans un engagement d'étanchéité avec une surface (48) du composant (14) monté de manière externe par rapport à la bague d'étanchéité (20), ladite bague d'étanchéité (20) présentant une projection axiale annulaire (60) s'étendant à partir de la base (22) de la section de canal sur le côté de celle-ci à distance des membres (24, 26) la surface interne de la projection annulaire (60) se situant radialement vers l'extérieur de la surface tronconique (62) de la base (22) de la bague d'étanchéité (20) et engageant une surface périphérique externe d'une partie (72) de la bague d'appui (70) et étant conçue pour s'engager avec une partie (72) de la bague d'appui (70) dans l'évidemment annulaire s'étendant axialement (80) dans le composant externe (14).

2. Assemblage d'étanchéité (10) selon la revendication 1, **caractérisé en ce que** la bague d'étanchéité (20) est constituée d'un matériau polymère à faible frottement.

3. Assemblage d'étanchéité (10) selon la revendication 2, **caractérisé en ce que** la bague d'étanchéité (20) est constituée de poly(tétrafluoroéthylène).

4. Assemblage d'étanchéité (10) selon l'une quelconque des revendications précédentes, **caractérisé en ce que** le membre interne (24) de la bague d'étanchéité présente une formation d'étanchéité annulaire (28) sur sa périphérie interne, la formation d'étanchéité annulaire (28) étant adjacente à une extrémité libre du membre interne (24).

5. Assemblage d'étanchéité (10) selon l'une quelconque des revendications précédentes, **caractérisé en ce qu'**un ressort cylindrique en anneau (32) agit sur la périphérie externe du membre interne (24) de la bague d'étanchéité (20) afin de charger de manière résiliente le membre interne (24) dans un engagement d'étanchéité avec le composant interne (12).

6. Assemblage d'étanchéité (10) selon l'une quelconque des revendications précédentes, **caractérisé en ce que** la bague rigide (50) est constituée de métal.
